# EUROPÄISCHE PATENTSCHRIFT

(11) **EP 2 255 163 B1**
(45) Veröffentlichungstag und Bekanntmachung des Hinweises auf die Patenterteilung: **15.10.2014**
(21) Anmeldenummer: 09721552.9
(22) Anmeldetag: 09.03.2009
(51) Int. Cl.: G01D 5/353, G01M 3/04

(54) **VORRICHTUNG ZUR LECKAGEERKENNUNG AUF EINEM SCHIFF**
DEVICE FOR DETECTING LEAKS ON A SHIP
DISPOSITIF DE DÉTECTION DE FUITE SUR UN NAVIRE

(30) Priorität: 18.03.2008 DE 102008014739
(43) Veröffentlichungstag der Anmeldung: 01.12.2010
(73) Patentinhaber: Siemens Aktiengesellschaft, 80333 München (DE)
(72) Erfinder: BOSSELMANN, Thomas, 91080 Marloffstein (DE); SCHRÖDER, Dierk, 24238 Selent (DE); HARTIG, Rainer, 21614 Buxtehude (DE)
(86) Internationale Anmeldenummer: PCT/EP2009/052704
(87) Internationale Veröffentlichungsnummer: WO 2009/115418

(56) Entgegenhaltungen:
- WO-A2-2004/094963
- IT-A1- MI20 071 506
- JP-A- 2003 329 417
- US-A1- 2005 163 424

## Beschreibung

Die Erfindung betrifft eine Leckageerkennungs-Vorrichtung zur Leckageerkennung auf einem Schiff, umfassend mindestens eine Bilge, mindestens einen in oder an der mindestens einen Bilge angeordneten Sensor und eine dem Sensor zugeordnete Signalverarbeitungseinrichtung, welche eingerichtet ist, aus einem von dem Sensor abgegebenen Signal mindestens ein einen Flüssigkeitsstand in der mindestens einen Bilge anzeigendes Signal abzuleiten . Weiterhin betrifft die Erfindung ein Schiff, welches eine derartige Leckageerkennungs-Vorrichtung umfasst, sowie die Verwendung mindestens einer derartigen Leckageerkennungs-Vorrichtung zur Erkennung einer Leckage auf einem Schiff.

Eine Leckageerkennung ist auf Schiffen aus offensichtlichen Gründen von hoher Bedeutung. Die Detektion von Leckagen erfolgt mit Hilfe von zur Leckagebekämpfung auf Schiffen im unteren Bereich des Schiffskörpers eingebauten Bilgen, d.h. Auffangräumen zur Sammlung von an Bord ausgetretenen Flüssigkeiten. Ein bestimmter permanenter Flüssigkeitszufluss in die Bilgen entsteht auch ohne Auftreten von Leckagen durch Kondensation der Umgebungsluft an der kälteren Schiffsaußenwand. Zur Detektion kleiner Mengen von Flüssigkeiten und zur optimierten Absaugung von Flüssigkeiten sind die Bilgen meist mit sogenannten Bilgebrunnen, d.h. Vertiefungszonen mit relativ geringen lateralen Abmessungen ausgestattet. In diesen Bilgebrunnen ergibt sich bereits bei Vorhandensein einer relativ geringen Flüssigkeitsmenge eine merkliche Höhe des Flüssigkeitsspiegels über dem Boden. In den Bilgebrunnen sind Sensoren angebracht, welche den Flüssigkeitsstand detektieren.

In der Regel werden zur Feststellung von Leckagen jeweils zwei bis drei Sensoren (High Level und Low Level und ggf. High High Level) in einem Bilgebrunnen installiert. Diese werden mittels Kabeln mit dem Bordcomputersystem verbunden. Bei größeren Schiffen bedeutet dies einen hohen Verkabelungsaufwand, da zahlreiche Bilgebrunnen über den gesamten unteren Bereich des Schiffes verteilt sind.

Aus der WO2004/094963A2 ist eine Fluiddetektionseinrichtung, insbesondere zur Detektion von Wasser in Laderäumen und anderen Kammern von Frachtschiffen oder anderen seetüchtigen Schiffen, insbesondere im Bereich der Bilgen, bekannt. Die Fluiddetektionseinrichtung umfasst unter anderem einen Fluidsensor, ein Gehäuse für den Fluidsensor mit einem Fluideinlass und einem Fluidauslass, einen Partikelfilter sowie einen Schwimmschalter.

Aus der JP2003329417A ist ein Sensor zur Messung einer Verformung bekannt, der einen Lichtwellenleiter mit einem Bragg-Gitter umfasst. Der Sensor wird zur Wasserstandsmessung an Flüssen, Seen, Staubecken, Staudämmen und Abwässern eingesetzt.

Aus der US2005163424A1 ist ein Sensor zur Messung eines Flüssigkeitsspiegel in einem Behälter oder Tank auf Basis einer optischen Faser enthaltend Bragg-Gitter bekannt.

Aus der IT MI 20071506 A2 bzw. der WO2009013151A1 ist eine Vorrichtung zur Bestimmung der Position eines Flussbettes und der Position der Oberfläche eines Flusses bekannt.

Es ist daher die Aufgabe der Erfindung, eine neue und zweckmäßige Vorrichtung zur Leckageerkennung auf einem Schiff zu schaffen, welche die Nachteile der herkömmlichen Leckagesensorik überwindet, d.h. die Installation einer Vielzahl von über das Schiff verteilten Sensoren vereinfacht und dennoch ausreichende Messgenauigkeit und Zuverlässigkeit bietet.

Diese Aufgabe wird erfindungsgemäß durch eine Vorrichtung mit den Merkmalen des Anspruchs 1 oder durch eine Vorrichtung mit den Merkmalen des Anspruchs 2 gelöst. Vorteilhafte Ausgestaltungen sind in den Unteransprüchen angegeben.

Erfindungsgemäß wird zur Leckageerkennung auf einem Schiff ein aus einem Lichtwellenleiter bestehender Sensor eingesetzt, entlang dessen an vorbestimmten Positionen eine Vielzahl von Bragg-Gittern mit untereinander verschiedenen Gitterperioden ausgebildet sind. Die dem Sensor zugeordnete Signalverarbeitungseinrichtung weist eine zur Einstrahlung von Licht in den Lichtwellenleiter geeignete Lichtquelle und einen zur spektralen Analyse des an den Bragg-Gittern zurückgestreuten Lichtes geeigneten Analysator auf. Der Lichtwellenleiter ist zumindest in einem Teilbereich enthaltend die Bragg-Gitter vertikal in der zumindest einen Bilge angeordnet, so dass die Anzahl der Bragg-Gitter, die sich unterhalb des Flüssigkeitsspiegels einer in der Bilge enthaltenen Flüssigkeit befinden, von dem Flüssigkeitsstand in der Bilge abhängt. Weiterhin umfasst die mindestens eine Bilge einen Bilgebrunnen, wobei ein mit mindestens einem Bragg-Gitter versehener Abschnitt des Lichtwellenleiters in dem Bilgebrunnen angeordnet ist.

Gemäß der Alternative nach Anspruch 1 ist ein einziger Lichtwellenleiter so verlegt, dass er nacheinander durch eine Vielzahl von verschiedenen Bilgen, insbesondere Bilgebrunnen, verläuft und eine Vielzahl von Bragg-Gittern entlang des Lichtwellenleiters so angeordnet sind, dass der Flüssigkeitsstand in mehreren verschiedenen Bilgen, insbesondere Bilgebrunnen, mittels des Lichtwellenleiters erfassbar ist.

Gemäß der Alternative nach Anspruch 2 ist mehreren verschiedenen Bilgen, insbesondere Bilgebrunnen, jeweils ein eigener Lichtwellenleiter als Sensor zugeordnet, wobei die Vorrichtung weiterhin optische Richtkoppler und weitere Lichtwellenleiter umfasst, und wobei die als Sensoren fungierenden Lichtwellenleiter jeweils über die optischen Richtkoppler und die weiteren Lichtwellenleiter mit der Lichtquelle und der Signalverarbeitungseinheit verbunden sind, wobei die optischen Richtkoppler durch die weiteren Lichtwellenleiter seriell miteinander verbunden sind.

Weiterhin wird die oben genannte Aufgabe durch ein Schiff, welches eine erfindungsgemäße Leckageerkennungs-Vorrichtung umfasst, sowie die Verwendung mindestens einer erfindungsgemäßen Leckageerkennungs-Vorrichtung zur Erkennung einer Leckage auf einem Schiff gelöst.

Eine Temperaturänderung sorgt für eine Verschiebung der an einem Bragg-Gitter zurückgestreuten, charakteristischen Wellenlänge. Aus der Wellenlängenverschiebung kann über die Temperaturänderung darauf geschlossen werden, ob ein mit einem Bragg-Gitter versehener Bereich des Lichtwellenleiters von Flüssigkeit umgeben ist oder nicht, wenn die Flüssigkeit eine von der Umgebung abweichende Temperatur aufweist. Andernfalls kann eine Temperaturänderung infolge einer in eine Flüssigkeit eingetauchten Lage eines Bereiches des Lichtwellenleiters durch eine Beheizung des gesamten Lichtwellenleiters herbeigeführt werden. In diesem Fall sorgt die erhöhte Wärmeableitung durch die Flüssigkeit für eine Temperaturabsenkung des eingetauchten Bereiches.

Zur Messung des Flüssigkeitsstandes in einer Bilge ist der Lichtwellenleiter in der Bilge so angeordnet, dass die Anzahl der Bragg-Gitter, die sich unterhalb des Flüssigkeitsspiegels einer in der Bilge enthaltenen Flüssigkeit befinden, von dem Flüssigkeitsstand in der Bilge abhängt. Dadurch wird eine Messung des Flüssigkeitsstandes ermöglicht, wobei die Auflösung durch die Anzahl der Bragg-Gitter und deren Abstände gegeben ist.

Besonders zweckmäßig ist die Anordnung eines mit mindestens einem Bragg-Gitter versehenen Abschnitts des Lichtwellenleiters in einem in der Bilge ausgebildeten Bilgebrunnen, in dem sich auch bei einer nur geringen Flüssigkeitsmenge ein Flüssigkeitsstand von merklicher Höhe über dem Boden einstellt.

Der Verlauf des Lichtwellenleiters, vorzugsweise in Form eines Glasfaserkabels, in der Bilge bzw. in dem Bilgebrunnen kann durch einen Trägerkörper vorgegeben werden, an dem das Glasfaserkabel entlanggeführt wird. Es ist auch möglich, die Glasfaser in eine vorinstallierte Hülle einzuführen. Dies hat den Vorteil, dass die Glasfaser im Bedarfsfall, d.h. bei Auftreten eines Defekts, ohne Medienkontakt getauscht werden kann. Ferner ergibt sich die Möglichkeit, solche Hüllen zwecks Referenzmessungen zu installieren. Aufgrund der geringen Dicke von Glasfasern und ihrer großen Flexibilität können diese auch bei schwierigen räumlichen Verhältnissen deutlich leichter installiert werden als konventionelle Messanordnungen.

Erfindungsgemäß übernimmt ein einziges Glasfaserkabel sowohl durch die darin eingearbeiteten Bragg-Gitter die Funktion mehrerer einzelner Sensorelemente, als auch gleichzeitig die Funktion einer Verbindungsleitung zwischen den einzelnen Sensorelementen und der Signalverarbeitungseinrichtung. Dabei verläuft diese Verbindungsleitung nicht sternförmig, sondern die einzelnen Sensorelemente und die Signalverarbeitungseinrichtung sind an ihr wie an einer Busleitung angeordnet und die Kommunikation zwischen jedem einzelnen Sensorelement und der Signalverarbeitungseinrichtung erfolgt zeitgleich nebeneinander im Frequenzmultiplexverfahren. Durch den Einsatz eines Lichtwellenleiters als Sensor kann daher im Vergleich zum Stand der Technik der Verkabelungsaufwand enorm reduziert werden.

Dabei ist es ist es auch möglich, einen einzigen Lichtwellenleiter nacheinander durch mehrere Bilgebrunnen zu verlegen und den Verkabelungsaufwand auf diese Weise noch weiter zu reduzieren. Besonders empfehlenswert ist es weiterhin, aus Lichtwellenleitern mit Bragg-Arrays Messanordnungen für Bilgebrunnen vorzukonfigurieren, welche später in geeigneter Weise mit Lichtwellenleiterkabeln verbunden werden. Hierzu ist es notwendig, jedem einzelnen Messpunkt eine spezifische Wellenlänge zuzuordnen, anhand derer er eindeutig identifizierbar ist. Es können dann sinnvolle Gruppen von Messanordnungen gebildet werden, die mit je einem Lichtwellenleiterkabel seriell verbunden werden.

Ein weiterer Vorteil der Erfindung ist die Unempfindlichkeit von Lichtwellenleiterkabeln gegenüber der Einstreuung elektromagnetischer Störungen, einem Problem, dass im modernen Schiffbau verstärkt auftritt.

Nachfolgend wird ein Ausführungsbeispiel der Erfindung anhand der Zeichnungen beschrieben. In diesen zeigt
- Fig.1: eine schematische Heckansicht eines Schiffs,
- Fig.2: eine schematische Seitenansicht des Schiffs von Fig. 1 mit einer beispielhaften Anordnung von Bilgen,
- Fig.3: eine schematische Draufsicht auf das Schiff von Fig. 1,
- Fig.4: einen Teil einer Bilge im Querschnitt,
- Fig.5: einen Teil der Bilge von Fig. 4 in der Draufsicht,
- Fig.6: den schematischen Aufbau einer erfindungsgemäßen Leckagesensorik,
- Fig.7: einen vergrößerten Ausschnitt aus einem Lichtwellenleiter mit integriertem Bragg-Gitter,
- Fig.8: eine spektrale Intensitätsverteilung einer breitbandigen Lichtquelle,
- Fig.9: das Funktionsprinzip eines erfindungsgemäßen Sensors und
- Fig.10: eine erfindungsgemäße Anordnung mehrerer miteinander verbundener Leckagesensoren.

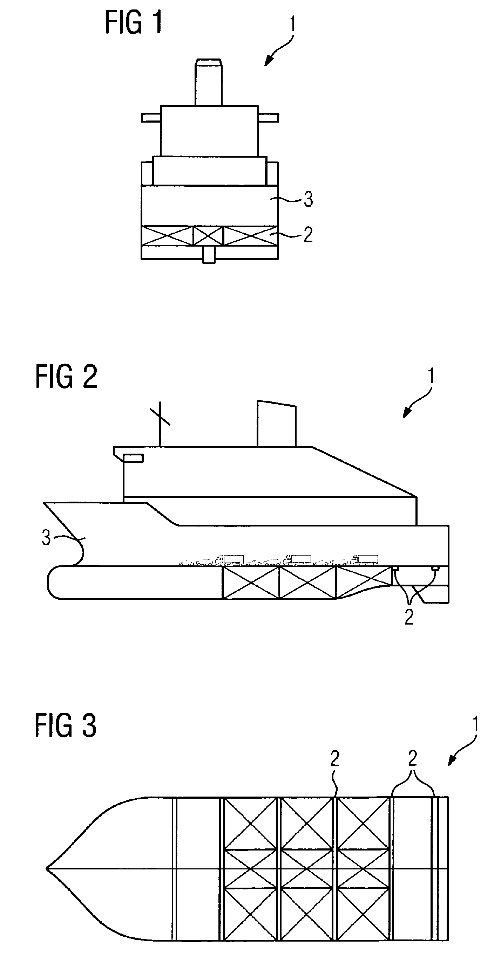

Die Figuren 1 bis 3 zeigen am Beispiel einer Fähre 1 die Anordnung von Bilgen 2 in einem Schiff. Die Bilgen 2 sind beispielhaft unter dem Fahrzeugdeck 3 der Fähre 1 angeordnet und dazu bestimmt, im Bereich des Fahrzeugdecks 3 beispielsweise aus dort abgestellten Fahrzeugen austretende oder von weiter oben in diesen Bereich einsickernde Flüssigkeiten zu sammeln. Die Bilgen 2 unterhalb des Fahrzeugdecks 3 sind im wesentlichen Rinnen, die in vorbestimmten Abständen voneinander in Querrichtung des Schiffsrumpfes verlaufen und mit geeigneten Pumpeinrichtungen verbunden.

Die dargestellten Bilgen 2 sind selbstverständlich nicht die einzigen an Bord der Fähre 1, sondern es können und müssen an beliebigen anderen Stellen, an denen eine Ansammlung von Flüssigkeiten zu erwarten ist, beispielsweise im Maschinenraum, wo ein Austreten von Treibstoff, Schmieröl und Kühlwasser möglich ist, weitere Bilgen eingebaut sein. Die dargestellte Anordnung der Bilgen 2 unter dem Fahrzeugdeck 3 ist als rein beispielhaft zu verstehen.

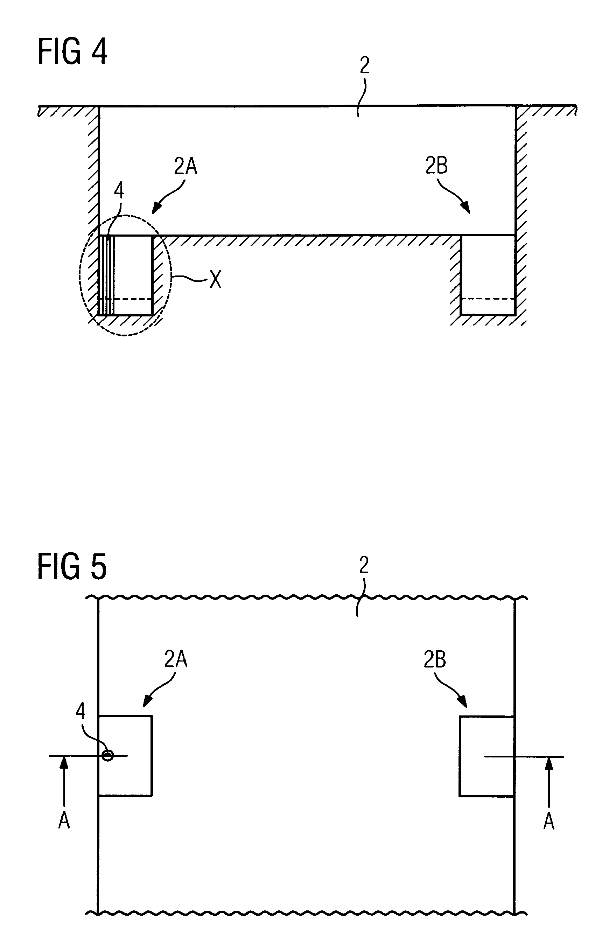

Eine vergrößerte Darstellung einer einzelnen Bilge 2 zeigen Fig. 4 im Querschnitt und Fig. 5 in der Draufsicht, wobei die Lage des in Fig. 4 sichtbaren Querschnitts in Fig. 5 durch die Linie A-A gegeben ist. In Fig. 5 ist nur ein kurzer Abschnitt der Bilge 2 zu sehen, deren Längsmittelachse durch eine strichpunktierte Linie markiert ist. In den Figuren 4 und 5 sind zwei sogenannte Bilgebrunnen 2A, 2B an den beiden Seitenrändern der Bilge 2 zu erkennen. Bei diesen Bilgebrunnen 2A, 2B handelt es sich um wannenförmige Vertiefungen der Bilge 2, deren Volumen verhältnismäßig klein ist, so dass sich auch bei Vorhandensein einer insgesamt nur geringen Flüssigkeitsmenge in der Bilge 2 in den Bilgebrunnen 2A, 2B bereits ein Flüssigkeitsstand von merklicher Höhe einstellt. Die Bilgebrunnen 2A, 2B eignen sich besonders gut zur frühzeitigen Feststellung einer Flüssigkeitsansammlung in der Bilge 2, die als Folge einer Leckage im Schiff an irgendeiner Stelle oberhalb des Einbauortes der Bilge 2 entstehen wird.

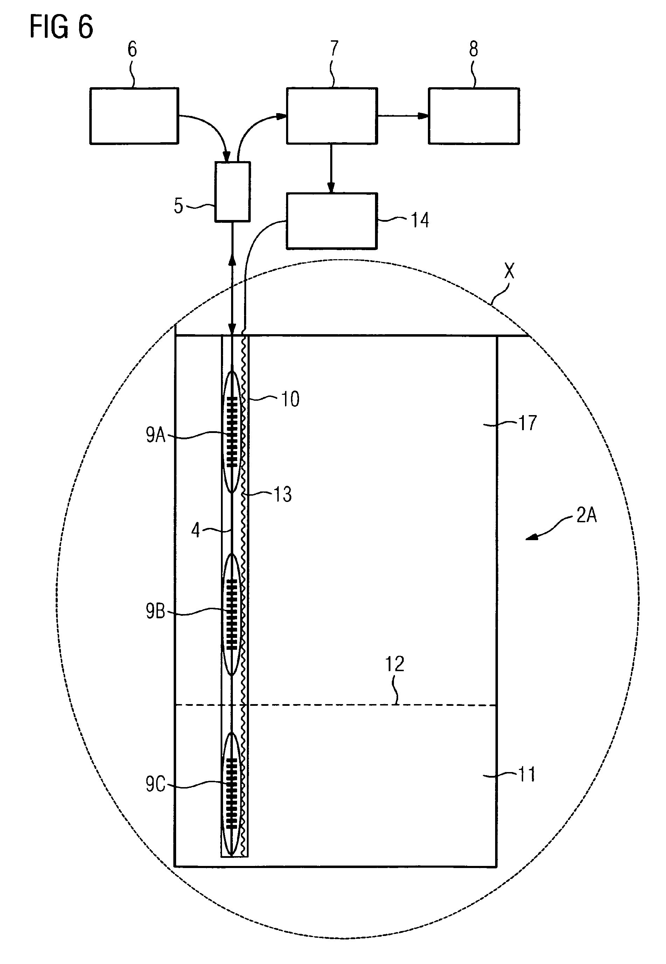

In dem in den Figuren 4 und 5 linksseitigen Bilgebrunnen 2A ist der Einbau eines erfindungsgemäßen Sensors in Form eines Lichtwellenleiters 4 zur Detektion einer Flüssigkeitsansammlung angedeutet. Ein solcher Sensor kann grundsätzlich in allen Bilgebrunnen, also beispielsweise auch in dem in den Figuren 4 und 5 rechtsseitigen Bilgebrunnen 2B vorgesehen sein. Beispielhaft soll aber die erfindungsgemäße Sensorik im Folgenden anhand des linksseitigen Bilgebrunnens 2A der Figuren 4 und 5 näher erläutert werden, wozu in Fig. 6 eine Vergrößerung des in Fig. 4 mit X gekennzeichneten Ausschnitts in Verbindung mit zum Betrieb des Lichtwellenleiters 4 benötigten weiteren Komponenten eines Messsystems dargestellt ist.

Erfindungsgemäß wird zur Messung des Flüssigkeitsstandes in dem Bilgebrunnen 2A ein Lichtwellenleiter 4, vorzugsweise in Form eines Glasfaserkabels eingesetzt, mit dem eigentlich eine Temperaturmessung vorgenommen wird. Von der Temperatur wird dann auf den Flüssigkeitsstand geschlossen. Hierzu ist der Lichtwellenleiter 4 ist über einen optischen Richtkoppler 5 mit einer breitbandig abstrahlenden Lichtquelle 6 und mit einer Signalverarbeitungseinrichtung 7 verbunden. Der Richtkoppler 5 koppelt von der Lichtquelle 6 abgestrahltes Licht in den Lichtwellenleiter 4 ein und aus diesem zurückgestreutes Licht zu der Signalverarbeitungseinrichtung 7 aus. Der Signalverarbeitungseinrichtung 7 ist eine Anzeigeeinheit 8 nachgeschaltet.

Entlang des Lichtwellenleiters 4 sind in diesem an vorbestimmten Positionen eine Vielzahl von Bragg-Gittern mit untereinander verschiedenen Gitterperioden ausgebildet. Rein beispielhaft sind in Fig. 6 drei solche Bragg-Gitter 9A, 9B und 9C dargestellt. Der Lichtwellenleiter 4 ist in ein dünnwandiges Rohr 10 aus Metall oder aus Kunststoff eingeführt, welches vertikal in dem Bilgebrunnen 2A angeordnet ist. In dem Bilgebrunnen 2A ist eine Flüssigkeit 11 vorhanden. Ein Teil des Lichtwellenleiters 4 befindet sich unterhalb des Flüssigkeitsspiegels 12 der Flüssigkeit 11. Folglich befindet sich auch ein Teil der Bragg-Gitter 9A, 9B und 9C unterhalb des Flüssigkeitsspiegels 12. In dem gezeigten Beispiel ist dies nur das Bragg-Gitter 9C.

In dem Rohr 10 ist außerdem noch eine Heizvorrichtung 13 angeordnet, die von einer Energiequelle 14 versorgt wird. Die Heizvorrichtung 13 kann beispielsweise ein Heizdraht sein, der entlang der Innenwand des Rohres 10 angebracht ist. Die Energiequelle 14 kann bei Bedarf von der Signalverarbeitungseinrichtung 7 aus aktiviert werden, worauf später noch näher eingegangen wird. Bei Aktivierung der Energiequelle 14 erwärmt die Heizvorrichtung 13 den Lichtwellenleiter 4 gleichmäßig entlang seiner gesamten Länge.

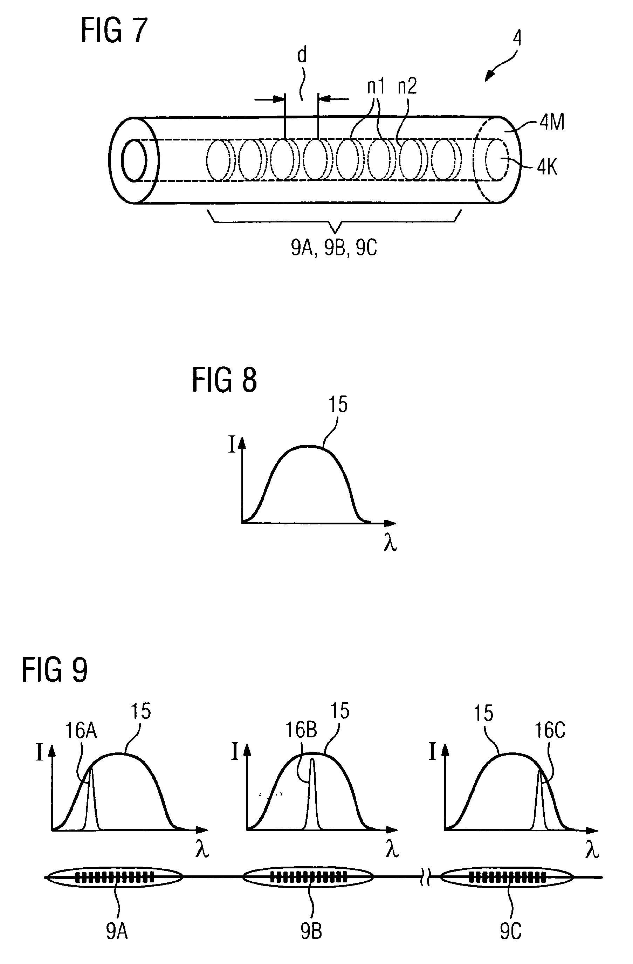

Das Funktionsprinzip des erfindungsgemäßen Sensors veranschaulichen die Figuren 7 bis 9. Von diesen zeigt Fig. 7 eine vergrößerte schematische Darstellung eines Abschnitts des aus einem Kern 4K und einem Mantel 4M bestehenden Lichtwellenleiters 4, und zwar eines Abschnitts, in dem ein Bragg-Gitter 9A, 9B oder 9C ausgebildet ist. Dieses besteht aus einer periodischen Folge von scheibenförmigen Bereichen, die einen von dem normalen Brechungsindex n₂ des Kerns 4K abweichenden Brechungsindex n₁ aufweisen. Die Periode des Gitters 9A, 9B oder 9C ist in Fig. 7 mit d gekennzeichnet.

Wird auf ein solches Gitter 9A, 9B oder 9C Licht mit einer breitbandigen Verteilung 15 der Intensität I über der Wellenlänge λ, wie sie Fig. 8 zeigt, eingestrahlt, dann wird ein geringer Teil des Lichtes an den Bragg-Gittern 9A, 9B und 9C zurückgestreut, und zwar mit einer jeweils charakteristischen spektralen Intensitätsverteilung 16A, 16B und 16C, die von der Gitterperiode d des jeweiligen Gitters 9A, 9B und 9C abhängt. Wie Fig. 9 erkennen lässt, ist die Wellenlänge λ des zurückgestreuten Lichtes umso größer, je größer die Gitterperiode ist.

Eine lokale Temperaturänderung des Lichtwellenleiters 4 im Bereich eines Bragg-Gitters 9A, 9B oder 9C führt zu einer lokalen Längenexpansion oder -kontraktion und damit zu einer Änderung der Gitterperiode d, was eine Verschiebung der spektralen Intensitätsverteilung 16A, 16B oder 16C des zurückgestreuten Lichtes zur Folge hat. Das Ausmaß dieser Verschiebung ist ein Maß für die Längenänderung und damit für die Temperaturänderung.

Die in der Messanordnung von Fig. 6 vorgesehene Signalverarbeitungseinrichtung 7 enthält einen Spektralanalysator zur Ermittlung der spektralen Verteilung des von den einzelnen Bragg-Gittern 9A, 9B und 9C zurückgestreuten Lichtes und eine Recheneinrichtung, welche das Ausmaß der jeweiligen Verschiebung gegenüber einer Referenzlage ermittelt und in eine Temperaturänderung gegenüber einer Referenztemperatur, bei der die spektrale Verteilung die Referenzlage hat, umrechnet. Dies geschieht für jedes einzelne Bragg-Gitter 9A, 9B und 9C, so dass auf diese Weise die Verteilung der Temperatur entlang des gesamten Lichtwellenleiters 4 erhalten wird.

Falls die in dem Bilgebrunnen 2A befindliche Flüssigkeit 11 eine signifikant andere Temperatur als die Umgebung hat, ergibt sich auf der Höhe des Flüssigkeitsspiegels 12 eine Stufe in der Temperaturverteilung. Die Recheneinrichtung der Signalverarbeitungseinrichtung 7 ermittelt die Lage dieser Stufe und ordnet ihr anhand der bekannten Positionen der Bragg-Gitter 9A, 9B und 9C entlang des Lichtwellenleiters 4 und dessen bekannter Anordnung innerhalb des Bilgebrunnens 2A eine vertikale Position bezüglich des Bilgebrunnens 2A zu, die als Flüssigkeitsstand an der Anzeigeeinheit 8 ausgegeben wird. Die Heizvorrichtung 13 wird in diesem Fall nicht benötigt und bleibt daher außer Betrieb.

Falls der Flüssigkeitsstand eines Bilgebrunnens 2 überwacht werden soll, in dem sich eine Flüssigkeit mit einer nicht signifikant von der Umgebungstemperatur abweichenden Temperatur befindet, dann wird die Energiequelle 14 aktiviert und gibt Leistung an die Heizvorrichtung 13 ab, was zu einer Erwärmung des Lichtwellenleiters 4 gegenüber der seiner Umgebung führt. Unterhalb des Flüssigkeitsspiegels 12 leitet die Flüssigkeit 11 aufgrund ihrer höheren Wärmekapazität die Wärmeleistung wesentlich besser von dem Rohr 10 ab als die Luft 17 oberhalb des Flüssigkeitsspiegels 12, so dass sich auch in diesem Fall auf der Höhe des Flüssigkeitsspiegels 12 eine Temperaturstufe ergibt, wobei in diesem Fall die Temperatur unterhalb des Flüssigkeitsspiegels niedriger liegt als oberhalb.

Die Lage der Temperaturstufe wird von der Recheneinrichtung der Signalverarbeitungseinrichtung 7 ermittelt und wie zuvor beschrieben in ein Maß für den Flüssigkeitsstand umgerechnet und an der Anzeigeeinheit 8 ausgegeben. Es versteht sich von selbst, dass die Funktion der erfindungsgemäßen Messanordnung nicht von der Art der Flüssigkeit abhängt, die in dem Bilgebrunnen 2A enthalten ist, sondern es kann im Prinzip ein Bilgebrunnen 2A mit beliebigem flüssigem Inhalt überwacht werden. Ob dabei von der Heizvorrichtung 13 Gebrauch gemacht werden muss oder nicht, hängt davon ab, ob die zu erwartende Temperatur der Flüssigkeit 11 von der Umgebungstemperatur abweicht oder nicht.

Es ist auch denkbar, die Energiequelle 14 periodisch zu aktivieren und zu deaktivieren und die Ermittlung einer Temperaturstufe entlang des Lichtwellenleiters 4 sowohl mit als auch ohne Beheizung desselben durch die Heizvorrichtung 13 vorzunehmen. Bei Abwesenheit von Flüssigkeit in dem Bilgebrunnen 2A lässt sich in keinem von beiden Fällen eine Temperaturstufe feststellen, während eine solche Temperaturstufe je nach Temperatur der Flüssigkeit 11 im Verhältnis zur Umgebung mit oder ohne Beheizung ausgeprägter und damit besser detektierbar sein kann.

Die in Fig. 6 dargestellte Konfiguration mit drei Bragg-Gittern 9A, 9B und 9C, d.h. drei Messstellen entlang der Höhe des Bilgebrunnens 2A ist zwar üblich, aber nicht notwendig. Es können je nach angestrebter Messgenauigkeit auch mehr oder weniger als drei Bragg-Gitter 9A, 9B und 9C vorgesehen werden.

Falls die Temperatur der in dem Bilgebrunnen 2A enthaltenen Flüssigkeit nicht von Interesse ist, spielt deren Absolutwert für die Messung keine entscheidende Rolle, d.h. es bestehen keine hohen Genauigkeitsanforderungen an die Kalibrierung bzw. keine Notwendigkeit einer Referenzmessung mit einem zusätzlichen Temperatursensor. Grundsätzlich ist aber eine gleichzeitige Temperaturerfassung möglich, da der Messeffekt auf einer Temperaturänderung basiert und daraus erst auf den Flüssigkeitsstand geschlossen wird.

Die Anzeigeeinheit 8 kann auch mit optischen und/oder akustischen Alarmgebern ausgestattet sein, welche die Schiffsbesatzung aktiv auf einen Flüssigkeitsstand oberhalb einer vorbestimmten Schwelle, der ein Indiz für das Vorliegen einer Leckage darstellt, aufmerksam machen, um eine frühzeitige Erkennung und Behebung von Leckagen zu ermöglichen.

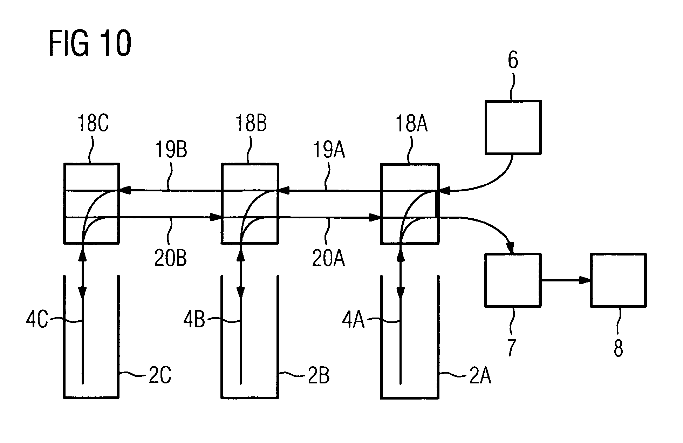

Da zur Leckageerkennung in einem Bilgebrunnen üblicherweise nur relativ wenige Messstellen, üblicherweise zwei bis drei, erforderlich sind, ist es möglich, mit einer einzigen Lichtquelle 6 und einer einzigen Signalverarbeitungseinrichtung 7 eine Vielzahl verschiedener Bilgebrunnen zu überwachen. Ein Schema einer hierzu geeigneten Anordnung zeigt Fig. 10.

Beispielhaft sind in Fig. 10 drei Bilgebrunnen 2A, 2B und 2C dargestellt, in denen jeweils ein Lichtwellenleiter 4A, 4B, bzw. 4C als Flüssigkeitssensor angeordnet ist. Jeder der Lichtwellenleiter 4A, 4B und 4C ist mit einem optischen Richtkoppler 18A, 18B bzw. 18C verbunden. Die Richtkoppler 18A, 18B und 18C sind über Lichtwellenleiter 19A, 19B, 20A und 20B seriell miteinander verbunden, wobei das von der Lichtquelle 6 eingestrahlte Licht durch die Lichtwellenleiter 19A und 19B über die Richtkoppler 18B und 18C zu den als Sensoren fungierenden Lichtwellenleitern 4B bzw. 4C weitergeleitet wird.

Das an den Bragg-Gittern der Lichtwellenleiter 4C und 4B zurückgestreute Licht wird über die Richtkoppler 18C und 18B und die Lichtwellenleiter 20B und 20A zu dem Richtkoppler 18A und von dort zu der Signalverarbeitungseinrichtung 7 zurückgeleitet. Die Lichtwellenleiter 19A, 19B, 20A und 20B dienen nur der Übertragung und wirken nicht als Sensoren, d.h. sie sind nicht mit Bragg-Gittern versehen. Nur der erste Richtkoppler 18A, an den als Sensor der Lichtwellenleiter 4A angeschlossen ist, ist wie der Richtkoppler 5 in Fig. 6 direkt mit der Lichtquelle 6 und mit der Signalverarbeitungseinrichtung 7 verbunden. Die Signalverarbeitungseinheit 7 ist wie zuvor mit einer Anzeigeeinheit 8 verbunden.

Die Anzahl von drei Bilgenbrunnen 2A, 2B und 2C in Fig. 10 ist rein beispielhaft gemeint. Es können auch mehr als drei Bilgenbrunnen nach dem in Fig. 10 gezeigten Schema überwacht werden, d.h. die weiteren Bilgebrunnen jeweils als Sensoren zugeordnete Lichtwellenleiter können durch weitere Richtkoppler und durch weitere Lichtwellenleiter, die als reine Übertragungsleitungen fungieren, an die Messanordnung angeschlossen werden, die nur eine einzige Lichtquelle 6, eine einzige Signalverarbeitungseinrichtung 7 und eine einzige Anzeigeeinheit 8 enthält. Wie aus Fig. 10 ohne weiteres ersichtlich ist, handelt es sich um eine serielle Verkabelung der einzelnen als Sensoren wirkenden Lichtwellenleiter 4A, 4B und 4C, die mit einem Minimum an Leitungslänge auskommt. Die Anzahl der Bilgebrunnen, die auf die in Fig. 10 gezeigte Weise verkabelt werden können, ist im wesentlichen nur durch die Bandbreite, die pro Bragg-Gitter zur spektralen Trennung der von den einzelnen Bragg-Gittern zurückgestreuten Signale vorgesehen werden muss, begrenzt.

## Patentansprüche

1. Leckageerkennungs-Vorrichtung zur Leckageerkennung auf einem Schiff, umfassend mindestens eine Bilge, mindestens einen in oder an der mindestens einen Bilge angeordneten Sensor und eine dem Sensor zugeordnete Signalverarbeitungseinrichtung, welche eingerichtet ist, aus einem von dem Sensor abgegebenen Signal mindestens ein einen Flüssigkeitsstand in der mindestens einen Bilge anzeigendes Signal abzuleiten, wobei der Sensor aus einem Lichtwellenleiter (4) besteht, entlang dessen an vorbestimmten Positionen eine Vielzahl von Bragg-Gittern (9A, 9B, 9C) mit untereinander verschiedenen Gitterperioden d ausgebildet sind, wobei weiterhin eine zur Einstrahlung von Licht in den Lichtwellenleiter (4) geeignete Lichtquelle (6) vorgesehen ist, wobei die Signalverarbeitungseinrichtung (7) einen Analysator zur Ermittlung der spektralen Zusammensetzung des an den Bragg-Gittern (9A, 9B, 9C) zurückgestreuten Lichtes und eine Recheneinrichtung zur Auswertung dieser spektralen Zusammensetzung aufweist, und wobei der Lichtwellenleiter (4) zumindest in einem Teilbereich enthaltend die Bragg-Gitter (9A, 9B, 9C) vertikal in der mindestens einen Bilge (2) angeordnet ist, so dass die Anzahl derjenigen Bragg-Gitter (9B, 9C), die sich unterhalb eines Flüssigkeitsspiegels (12) einer in der mindestens einen Bilge (2) enthaltenen Flüssigkeit (11) befinden, von der Höhe des Flüssigkeitsstandes in der mindestens einen Bilge (2) abhängt, wobei die mindestens eine Bilge (2) einen Bilgebrunnen (2A) umfasst und ein mit mindestens einem Bragg-Gitter (9A, 9B, 9C) versehener Abschnitt des Lichtwellenleiters (4) in dem Bilgebrunnen (2A) angeordnet ist, und wobei ein einziger Lichtwellenleiter (4) so verlegt ist, dass er nacheinander durch eine Vielzahl von verschiedenen Bilgen (2), insbesondere Bilgebrunnen (2A), verläuft und eine Vielzahl von Bragg-Gittern (9A, 9B, 9C) entlang des Lichtwellenleiters (4) so angeordnet sind, dass der Flüssigkeitsstand in mehreren verschiedenen Bilgen (2), insbesondere Bilgebrunnen (2A), mittels des Lichtwellenleiters (4) erfassbar ist.

2. Leckageerkennungs-Vorrichtung zur Leckageerkennung auf einem Schiff, umfassend mindestens eine Bilge, mindestens einen in oder an der mindestens einen Bilge angeordneten Sensor und eine dem Sensor zugeordnete Signalverarbeitungseinrichtung, welche eingerichtet ist, aus einem von dem Sensor abgegebenen Signal mindestens ein einen Flüssigkeitsstand in der mindestens einen Bilge anzeigendes Signal abzuleiten, wobei der Sensor aus einem Lichtwellenleiter (4) besteht, entlang dessen an vorbestimmten Positionen eine Vielzahl von Bragg-Gittern (9A, 9B, 9C) mit untereinander verschiedenen Gitterperioden d ausgebildet sind, wobei weiterhin eine zur Einstrahlung von Licht in den Lichtwellenleiter (4) geeignete Lichtquelle (6) vorgesehen ist, wobei die Signalverarbeitungseinrichtung (7) einen Analysator zur Ermittlung der spektralen Zusammensetzung des an den Bragg-Gittern (9A, 9B, 9C) zurückgestreuten Lichtes und eine Recheneinrichtung zur Auswertung dieser spektralen Zusammensetzung aufweist, und wobei der Lichtwellenleiter (4) zumindest in einem Teilbereich enthaltend die Bragg-Gitter (9A, 9B, 9C) vertikal in der mindestens einen Bilge (2) angeordnet ist, so dass die Anzahl derjenigen Bragg-Gitter (9B, 9C), die sich unterhalb eines Flüssigkeitsspiegels (12) einer in der mindestens einen Bilge (2) enthaltenen Flüssigkeit (11) befinden, von der Höhe des Flüssigkeitsstandes in der mindestens einen Bilge (2) abhängt, wobei die mindestens eine Bilge (2) einen Bilgebrunnen (2A) umfasst und ein mit mindestens einem Bragg-Gitter (9A, 9B, 9C) versehener Abschnitt des Lichtwellenleiters (4) in dem Bilgebrunnen (2A) angeordnet ist, und wobei mehreren verschiedenen Bilgen (2), insbesondere Bilgebrunnen (2A, 2B, 2C), jeweils ein eigener Lichtwellenleiter (4A, 4B, 4C) als Sensor zugeordnet ist, wobei die Vorrichtung weiterhin optische Richtkoppler (18A, 18B, 18C) und weitere Lichtwellenleiter (19A, 19B, 20A, 20B) umfasst, und wobei die als Sensoren fungierenden Lichtwellenleiter (4A, 4B, 4C) jeweils über die optischen Richtkoppler (18A, 18B, 18C) und die weiteren Lichtwellenleiter (19A, 19B, 20A, 20B) mit der Lichtquelle (6) und der Signalverarbeitungseinheit (7) verbunden sind, wobei die optischen Richtkoppler (18A, 18B, 18C) durch die weiteren Lichtwellenleiter (19A, 19B, 20A, 20B) seriell miteinander verbunden sind.

3. Leckageerkennungs-Vorrichtung nach Anspruch 1 oder 2,
wobei die Vorrichtung weiterhin einen steifen Trägerkörper (10) aufweist und der Lichtwellenleiter (4) in oder an dem steifen Trägerkörper (10) angeordnet ist, wobei eine Form des Trägerkörpers (10) den Verlauf des Lichtwellenleiters (4) in der mindestens einen Bilge (2), insbesondere dem Bilgebrunnen (2A), festlegt.

4. Leckageerkennungs-Vorrichtung nach Anspruch 3,
wobei der Trägerkörper (10) aus einem Rohr besteht.

5. Leckageerkennungs-Vorrichtung nach Anspruch 3 oder 4,
wobei der Lichtwellenleiter (4) austauschbar in einem Hohlraum des Trägerkörpers (10) angeordnet und durch den Trägerkörper (10) vor unmittelbarem Kontakt mit einer in der mindestens einen Bilge (2) bzw. dem Bilgebrunnen (2A) befindlichen Flüssigkeit (11) geschützt angeordnet ist.

6. Leckageerkennungs-Vorrichtung nach einem der Ansprüche 1 bis 5,
wobei die Vorrichtung weiterhin eine Heizvorrichtung (13) umfasst, die entlang des Lichtwellenleiters (4) und benachbart zu diesem angeordnet ist und durch welche eine vorbestimmbare Wärmeleistung pro Längeneinheit abgebbar ist.

7. Leckageerkennungs-Vorrichtung nach einem der Ansprüche 1 bis 6,
wobei die Signalverarbeitungseinrichtung (7) eingerichtet ist, das den Flüssigkeitsstand anzeigende Signal aus Verschiebungen der Lagen der spektralen Intensitätsverteilungen (16A, 16B, 16C) der von den einzelnen Bragg-Gittern (9A, 9B, 9C) zurückgestreuten Lichtsignale gegenüber jeweiligen Referenzlagen abzuleiten.

8. Leckageerkennungs-Vorrichtung nach Anspruch 7,
wobei die Signalverarbeitungseinrichtung (7) eingerichtet ist, anhand der Verteilung des Ausmaßes der Verschiebungen zwei Gruppen von Bragg-Gittern (9A, 9B, 9C) zu identifizieren, einer dieser Gruppen (9C) eine Position unterhalb des Flüssigkeitsspiegels (12) und der anderen Gruppe (9A, 9B) eine Position oberhalb des Flüssigkeitsspiegels (12) zuzuordnen und aus den vorbestimmten Positionen der Bragg-Gitter (9A, 9B, 9C) entlang des Lichtwellenleiters (4) das den Flüssigkeitsstand in der mindestens einen Bilge (2), insbesondere dem Bilgebrunnen (2A), anzeigende Signal abzuleiten.

9. Leckageerkennungs-Vorrichtung nach einem der Ansprüche 1 bis 8,
wobei der Lichtwellenleiter (4) in der mindestens einen Bilge (2),insbesondere dem Bilgebrunnen (2A), so angeordnet ist, dass sich mindestens eines der Bragg-Gitter (9A, 9B, 9C) unabhängig von dem Flüssigkeitsstand stets oberhalb des Flüssigkeitsspiegels (12) befindet, und wobei die Signalverarbeitungseinrichtung (7) eingerichtet ist, das von diesem Bragg-Gitter (9A) zurückgestreute Lichtsignal als Referenzsignal zum Vergleich mit den von den übrigen Bragg-Gittern (9B, 9C) zurückgestreuten Lichtsignalen heranzuziehen.

10. Leckageerkennungs-Vorrichtung nach einem der Ansprüche 1 bis 9,
wobei der Signalverarbeitungseinrichtung (7) eine Anzeigeeinheit (8) nachgeschaltet ist, welche mit optischen und/oder akustischen Alarmgebern ausgestattet ist.

11. Schiff, umfassend mindestens eine Leckageerkennungs-Vorrichtung nach einem der Ansprüche 1 bis 10.

12. Verwendung mindestens einer Leckageerkennungs-Vorrichtung nach einem der Ansprüche 1 bis 10 zur Erkennung einer Leckage auf einem Schiff.

## Claims

1. Leak detection device for detecting leaks on a ship, comprising at least one bilge, at least one sensor disposed in or on the at least one bilge and a signal processing device assigned to the sensor, which is configured to derive from a signal emitted by the sensor at least one signal indicating a liquid state in the at least one bilge, wherein the sensor consists of an optical waveguide (4) along which, at predetermined positions, a plurality of Bragg gratings (9A, 9B, 9C) with grating periods d differing from one another are embodied, wherein furthermore a light source (6) suitable for feeding incident light into the optical waveguide (4) is provided, wherein the signal processing device (7) has an analyser for determining the spectral composition of the light scattered back at the Bragg gratings (9A, 9B, 9C) and a calculation device for evaluating this spectral composition, and wherein the optical waveguide (4) is disposed, at least in a subarea containing the Bragg gratings (9A, 9B, 9C), vertically in the at least one bilge (2) so that the number of those Bragg gratings (9B, 9C), which are located below a liquid level (12) of a liquid (11) contained in the at least one bilge (2) depends on the height of the liquid state in the at least one bilge (2), wherein the at least one bilge (2) has a bilge well (2A) and a section of the optical waveguide (4) provided with at least one Bragg grating (9A, 9B, 9C) is disposed in the bilge well (2A) and wherein a single optical waveguide (4) is laid so that it runs consecutively through a plurality of different bilges (2), especially bilge wells (2A), and a plurality of Bragg gratings (9A, 9B, 9C) are disposed along the optical waveguide (4) so that the liquid state in the number of different bilges (2), especially bilge wells (2A), is able to be detected by means of the optical waveguide (4).

2. Leak detection device for detecting leaks on a ship, comprising at least one bilge, at least one sensor disposed in or on the at least one bilge and a signal processing device assigned to the sensor, which is configured to derive from a signal emitted by the sensor at least one signal indicating a liquid state in the at least one bilge, wherein the sensor consists of an optical waveguide (4) along which, at predetermined positions, a plurality of Bragg gratings (9A, 9B, 9C) with grating periods d differing from one another are embodied, wherein furthermore a light source (6) suitable for feeding incident light into the optical waveguide (4) is provided, wherein the signal processing device (7) has an analyser for determining the spectral composition of the light scattered back at the Bragg gratings (9A, 9B, 9C) and a calculation device for evaluating this spectral composition, and wherein the optical waveguide (4) is disposed, at least in a subarea containing the Bragg gratings (9A, 9B, 9C), vertically in the at least one bilge (2) so that the number of those Bragg gratings (9B, 9C), which are located below a liquid level (12) of a liquid (11) contained in the at least one bilge (2) depends on the height of the liquid state in the at least one bilge (2), wherein the at least one bilge (2) has a bilge well (2A) and a section of the optical waveguide (4) provided with at least one Bragg grating (9A, 9B, 9C) is disposed in the bilge well (2A) and wherein a number of different bilges (2), especially bilge wells (2A, 2B, 2C), are each assigned their own optical waveguide (4A, 4B, 4C) as sensor, wherein the device also comprises optical directional couplers (18A, 18B, 18C) and further optical waveguides (19A, 19B, 20A, 20B) and wherein the optical waveguides (4A, 4B, 4C) functioning as sensors are each connected via the optical directional coupler (18A, 18B, 18C) and the further optical waveguides (19A, 19B, 20A, 20B) to the light source (6) and the signal processing unit (7), wherein the optical directional couplers (18A, 18B, 18C) are connected serially to one another by the further optical waveguides (19A, 19B, 20A, 20B).

3. Leak detection device according to claim 1 or 2, wherein the device also has a rigid carrier element (10) and the optical waveguide (4) is disposed in or on the rigid carrier element, wherein a shape of the carrier element (10) defines the course of the optical waveguide (4) in the at least one bilge (2), especially the bilge wells (2A).

4. Leak detection device according to claim 3, wherein the carrier element (10) consists of a pipe.

5. Leak detection device according to claim 3 or 4, wherein the optical waveguide (4) is disposed exchangably in a void of the carrier element (10) and is disposed protected by the carrier element (10) from direct contact with a liquid (11) located in the at least one bilge (2) or the bilge well (2A).

6. Leak detection device according to one of claims 1 to 5, wherein the device also includes a heating device (13) which is disposed along the optical waveguide (4) and adjacent thereto and by which a predeterminable heat output per unit of length is able to be emitted.

7. Leak detection device according to one of claims 1 to 6, wherein the signal processing device (7) is configured to derive the signal indicating the liquid state from shifts in the positions of the spectral intensity distributions (16A, 16B, 16C) of the light signals scattered back from the various Bragg gratings (9A, 9B, 9C) in relation to respective reference positions.

8. Leak detection device according to claim 7,
wherein the signal processing device (7) is configured, on the basis of the distribution of the extent of the shifts, to identify two groups of Bragg gratings (9A, 9B, 9C), to assign to one of these groups (9C) a position below the liquid level (12) and to the other group (9A, 9B) a position above the liquid level (12) and from the predetermined positions of the Bragg gratings (9A, 9B, 9C) along the optical waveguide (4) to derive the signal indicating the liquid state in the least one bilge (2), especially the bilge well (2A).

9. Leak detection device according to one of claims 1 to 8, wherein the optical waveguide (4) in the at least one bilge (2), especially the bilge well (2A), is disposed so that at least one of the Bragg gratings (9A, 9B, 9C), regardless of the liquid state, is always disposed above the liquid level (12) and whereby the signal processing device (7) is configured to include the light signal scattered back by this Bragg grating (9A) as a reference signal for comparison with the light signals scattered back by the other Bragg gratings (9B, 9C).

10. Leak detection device according to one of claims 1 to 9, wherein the signal processing device (7) is connected downstream of a display unit (8) which is equipped with optical and/or acoustic alarm generators.

11. Ship comprising at least one leak detection device according to one of claims 1 to 10.

12. Use of at least one leak detection device according to one of claims 1 to 10 for detecting a leak on a ship.

## Revendications

1. Dispositif de détection de fuite sur un bateau, comprenant au moins un fond de cale, au moins un capteur disposé dans ou sur le au moins un fond de cale et un dispositif de traitement du signal associé au capteur, qui est conçu pour déduire d'un signal émis par le capteur au moins un signal indiquant un niveau de liquide dans le au moins un fond de cale, le capteur étant constitué d'une fibre ( 4 ) optique, le long de laquelle sont constitués, en des positions définies à l'avance, une pluralité de réseaux ( 9A, 9B, 9C ) de Bragg ayant des périodes d de réseau différentes entre elles, dans lequel il est prévu, en outre, une source ( 6 ) lumineuse propre à envoyer de la lumière dans la fibre ( 4 ) optique, dans lequel le dispositif ( 7 ) de traitement du signal a un analyseur, pour la détermination de la composition spectrale de la lumière rétrodiffusée sur les réseaux ( 9A, 9B, 9C ) de Bragg, et un dispositif informatique, pour l'exploitation de cette composition spectrale, et dans lequel la fibre ( 4 ) optique est disposée, au moins dans une zone partielle contenant les réseaux ( 9A, 9B, 9C ) de Bragg, verticalement dans le au moins un fond ( 2 ) de cale, de manière à ce que le nombre des réseaux ( 9A, 9B, 9C ) de Bragg, qui se trouvent sous un niveau ( 12 ) d'un liquide ( 11 ) contenu dans le au moins un fond ( 2 ) de cale, dépende du niveau du liquide dans le au moins un fond ( 2 ) de cale, dans lequel le au moins un fond ( 2 ) de cale comprend un puits ( 2A ) de fond de cale et un tronçon, pourvu d'au moins un réseau ( 9A, 9B, 9C ) de Bragg, de la fibre ( 4 ) optique est disposé dans le puits ( 2A ) du fond de cale et dans lequel une fibre ( 4 ) optique unique est posée, de manière à s'étendre successivement dans une pluralité de fonds ( 2 ) de cale différents, notamment de puits ( 2A ) de fond de cale, et une pluralité de réseaux ( 9A, 9B, 9C ) de Bragg sont disposés le long de la fibre ( 4 ) optique, de manière à pouvoir détecter le niveau du liquide dans plusieurs fonds ( 2 ) de cale différents, notamment plusieurs puits ( 2A ) de fonds de cale, au moyen de la fibre ( 4 ) optique.

2. Dispositif de détection de fuite sur un bateau, comprenant au moins un fond de cale, au moins un capteur disposé dans ou sur le au moins un fond de cale et un dispositif de traitement du signal associé au capteur, qui est conçu pour déduire d'un signal émis par le capteur au moins un signal indiquant un niveau de liquide dans le au moins un fond de cale, le capteur étant constitué d'une fibre ( 4 ) optique, le long de laquelle sont constitués, en des positions définies à l'avance, une pluralité de réseaux ( 9A, 9B, 9C ) de Bragg ayant des périodes d de réseau différentes entre elles, dans lequel il est prévu, en outre, une source ( 6 ) lumineuse propre à envoyer de la lumière dans la fibre ( 4 ) optique, dans lequel le dispositif ( 7 ) de traitement du signal a un analyseur, pour la détermination de la composition spectrale de la lumière rétrodiffusée sur les réseaux ( 9A, 9B, 9C ) de Bragg, et un dispositif informatique, pour l'exploitation de cette composition spectrale, et dans lequel la fibre ( 4 ) optique est disposée, au moins dans une zone partielle contenant les réseaux ( 9A, 9B, 9C ) de Bragg, verticalement dans le au moins un fond ( 2 ) de cale, de manière à ce que le nombre des réseaux ( 9A, 9B, 9C ) de Bragg, qui se trouvent sous un niveau ( 12 ) d'un liquide ( 11 ) contenu dans le au moins un fond ( 2 ) de cale, dépende du niveau du liquide dans le au moins un fond ( 2 ) de cale, dans lequel le au moins un fond ( 2 ) de cale comprend un puits ( 2A ) de fond de cale et un tronçon, pourvu d'au moins un réseau ( 9A, 9B, 9C ) de Bragg, de la fibre ( 4 ) optique est disposé dans le puits ( 2A ) du fond de cale et dans lequel, à plusieurs fonds ( 2 ) de cale différents, notamment à plusieurs puits ( 2A, 2B, 2C ) de fonds de cale différents, est associée respectivement une propre fibre ( 4A, 4B, 4C ) optique comme capteur, le dispositif comprenant, en outre, des coupleurs ( 18A, 18B, 18C ) directionnels optiques et les autres fibres ( 19A, 19B, 20A, 20B ) optiques étant reliées à la source ( 6 ) lumineuse et à l'unité ( 7 ) de traitement du signal, les coupleurs ( 18A, 18B, 18C ) directionnels optiques étant reliés entre eux en série par les autres fibres ( 19A, 19B, 20A, 20B ) optiques.

3. Dispositif de détection de fuite suivant la revendication 1 ou 2,
dans lequel le dispositif a, en outre, un corps ( 10 ) rigide formant support et la fibre ( 4 ) optique est disposée dans ou sur le corps ( 10 ) rigide formant support, une forme du corps ( 10 ) formant support fixant le parcours de la fibre ( 4 ) optique dans le au moins un fond ( 2 ) de cale, notamment dans le puits ( 2A ) du fond de cale.

4. Dispositif de détection de fuite suivant la revendication 3, dans lequel le corps ( 10 ) formant support est constitué d'un tube.

5. Dispositif de détection de fuite suivant la revendication 3 ou 4,
dans lequel la fibre ( 4 ) optique est montée remplaçable dans une cavité du corps ( 10 ) formant support et est montée protégée par le corps ( 10 ) formant support d'un contact direct avec un liquide ( 11 ) se trouvant dans le au moins un fond ( 2 ) de cale ou dans le puits ( 2A ) du fond de cale.

6. Dispositif de détection de fuite suivant l'une des revendications 1 à 5,
dans lequel le dispositif comprend, en outre, un dispositif ( 13 ) de chauffage, qui est disposé le long de la fibre ( 4 ) optique et en son voisinage et par lequel une puissance calorifique par unité de longueur pouvant être déterminée à l'avance peut être cédée.

7. Dispositif de détection de fuite suivant l'une des revendications 1 à 6,
dans lequel le dispositif ( 7 ) de traitement du signal est conçu pour déduire le signal indiquant le niveau du liquide de décalages des positions des répartitions ( 16A, 16B, 16C ) d'intensité spectrale de signaux lumineux rétrodiffusés par les divers réseaux ( 9A, 9B, 9C ) de Bragg par rapport à des positions de référence respectives.

8. Dispositif de détection de fuite suivant la revendication 7, dans lequel le dispositif ( 7 ) de traitement du signal est conçu pour, au moyen de la répartition de la grandeur des décalages, identifier deux groupes de réseaux ( 9A, 9B, 9C ) de Bragg pour associer à l'un de ces groupes ( 9C ) une position en dessous du niveau ( 12 ) du liquide et à l'autre groupe ( 9A, 9B ) une position au-dessus du niveau ( 12 ) du liquide et pour déduire, à partir des positions définies à l'avance des réseaux ( 9A, 9B, 9C ) de Bragg le long de la fibre ( 4 ) optique, le signal indiquant le niveau du liquide dans le au moins un fond ( 2 ) de cale, notamment dans le puits ( 2A ) du fond de cale.

9. Dispositif de détection de fuite suivant l'une des revendications 1 à 8,
dans lequel la fibre ( 4 ) optique est disposée dans le au moins un fond ( 2 ) de cale, notamment dans le puits ( 2A ) du fond de cale, de manière à ce qu'au moins l'un des réseaux ( 9A, 9B, 9C ) de Bragg se trouve, indépendamment du niveau du liquide, toujours au-dessus du niveau d'eau du liquide et dans lequel le dispositif ( 7 ) de traitement du signal est conçu pour mettre à profit le signal lumineux rétrodiffusé par ce réseau ( 9A ) de Bragg comme niveau de référence pour la comparaison avec les signaux lumineux rétrodiffusés par les autres réseaux ( 9A, 9B, 9C ) de Bragg.

10. Dispositif de détection de fuite suivant l'une des revendications 1 à 9,
dans lequel, en aval du dispositif ( 7 ) de traitement du signal, est montée une unité ( 8 ) d'indication, qui est équipée de donneurs d'alerte optique et/ou acoustique.

11. Bateau comprenant au moins un dispositif de détection de fuite suivant l'une des revendications 1 à 10.

12. Utilisation d'au moins un dispositif de détection de fuite suivant l'une des revendications 1 à 10 pour détecter une fuite sur un bateau.
